# EUROPÄISCHE PATENTANMELDUNG

(11) **EP 2 361 753 A1**
(43) Veröffentlichungstag der Anmeldung: **31.08.2011**
(21) Anmeldenummer: 11154758.4
(22) Anmeldetag: 17.02.2011
(51) Int. Cl.: B29C 70/32, B29C 70/34, B29C 70/38

(54) **Verfahren und Anordnung zur Herstellung eines einstückigen Hohlprofilbauteils mit Faserverbundwerkstoff**

(30) Priorität: 19.02.2010 DE 102010008711
(71) Anmelder: GKN Aerospace Services Limited, Isle of Wight PO32 7RA (GB)
(72) Erfinder: Kohlen, Ralf, 82008, Unterhaching (DE)
(74) Vertreter: Rössler, Matthias

(57) **Zusammenfassung**

Verfahren zur Herstellung eines einstückigen Hohlprofilbauteils (1) mit Faserverbundwerkstoff (2), umfassend zumindest die folgenden Schritte:
a) Bereitstellen wenigstens eines inneren Werkzeugkerns (3),
b) Bedecken des wenigstens einen inneren Werkzeugkerns (3) mit zumindest einer Lage (4) aus Faserverbundwerkstoff (2),
c) Aushärten der mindestens einen Lage (4) aus Faserverbundwerkstoff (2),
d) Entfernen des wenigstens einen inneren Werkzeugkerns (3).

Hiermit lassen sich besonders maßgenaue Flugzeugbauteile (9) herstellen, welche ein einstückiges Hohlprofilbauteil (1) mit einen sich verjüngenden Querschnitt (10) und eine Mehrzahl von längs verlaufenden Spanten (8) aufweist.

## Beschreibung

Die vorliegende Erfindung bezieht sich auf ein Verfahren und eine Anordnung zur Herstellung eines einstückigen Hohlprofilbauteils mit Faserverbundwerkstoff, insbesondere ein Flugzeugbauteil. Als ein solches Flugzeugbauteil kommt insbesondere eine Strömungsfläche in Betracht, die beispielsweise Teil eines Flügels, eines Leitwerks oder dergleichen ist.

Im Hinblick auf die Bestrebungen, Flugzeuge in Zukunft ökologisch angepasst sowie kostengünstig in der Herstellung im Betrieb bereitzustellen und dennoch den strengsten Sicherheitsbestimmungen gerecht zu werden, wird zunehmend nach Möglichkeiten gesucht, die essentiellen Primärstrukturen (z. B. Flügelkomponenten wie das Seitenleitwerk und/oder das Höhenleitwerk und/oder das Querruder) nicht mehr aus Aluminium sondern mit faserverstärktem Verbundwerkstoff herzustellen. Mit dieser Leichtbau-Technik kann insbesondere das Gewicht der Flugzeuge deutlich reduziert werden. Bei der Herstellung solcher essentieller Primärstrukturen ist zu berücksichtigen, dass diese beachtliche Ausmaße annehmen: So sind beispielsweise die Landeklappen oder Seitenleitwerke von Flugzeugen Bauteile, die sich über mehrere Meter erstrecken. Diese Flugzeugbauteile sind zudem hohen Belastungen ausgesetzt und stellen damit sicherheitskritische Bauteile dar, bei denen besondere Festigkeits-, Steifigkeits- und Qualitätsanforderungen eingehalten werden müssen. Zudem ist zu berücksichtigen, dass diese Flugzeugbauteile gegebenenfalls mit anderen Komponenten montiert werden müssen, so dass auch hier die Maßhaltigkeit der Flugzeugbauteile eine besondere Relevanz hat. Dies betrifft zum einen die äußeren Oberflächen des Flugzeugbauteils, weil diese für das Strömungsverhalten relevant sind, zudem sind jedoch auch die Innenflächen mit einer besondere Maßgenauigkeit zu fertigen, weil hier gegebenenfalls Versteifungsstrukturen, Apparate, Trennwände oder dergleichen eingepasst werden müssen.

Solche faserverstärkten Verbundwerkstoffe umfassen im Allgemeinen zwei wesentliche Komponenten, nämlich einmal die Faser und andererseits eine die Faser umgebende Polymermatrix. Die Polymermatrix umschließt die Faser und wird beispielsweise durch eine thermische Behandlung gehärtet (Polymerisation), so dass eine dreidimensionale Vernetzung erfolgt. Mit dieser Polymerisation wird erreicht, dass die Fasern fest miteinander verbunden sind und so Kräfte, nämlich überwiegend über Schubspannungen, in die Fasern eingeleitet werden. Als Fasern kommen neben Kohlefasern gegebenenfalls auch Glasfasern in Betracht. Kohlefasern, die heutzutage noch vergleichsweise teuer sind, bestehen regelmäßig zu mindesten 90 Gew.-% aus Kohlenstoff. Der Faserdurchmesser beträgt beispielsweise 4,5 bis 8 µm [Mikrometer]. Die Eigenschaften solcher Kohlefasern sind anisotop. Im Gegensatz besitzen Glasfasern eine amorphe Struktur und isotrope Eigenschaften. Sie bestehen überwiegend aus Siliziumoxid, wobei gegebenenfalls weitere Oxide beigemengt sein können. Während Glasfasern relativ günstig sind, zeichnen sich die Kohlefasern durch ihre hohe Festigkeit und Steifigkeit aus.

Gerade im Flugzeugbau wird die sogenannte Prepreg-Technik eingesetzt. Bei dieser Technologie werden z. B. vorimprägnierte Gewebe oder andere konfektionierte textile Halbzeuge in Kunstharz getränkt und lediglich bis zu einer leichten Verfestigung (Gelierung) thermisch behandelt, so dass diese lagenweise handhabbar sind. Ein solches Prepreg-Material haftet ein wenig und ist somit gut in Formwerkzeugen bzw. schichtweise aufeinander anordenbar, bis eine gewünschte Bauteil-Form ausgebildet ist. Sind die gewünschten Schichten bzw. Lagen des Prepreg-Materials und des Vakuumaufbaus (äußere Schutzhülle für die Vakuumbehandlung) angeordnet, so können sie (thermisch) ausgehärtet werden. Zum Aushärten dieser Prepreg-Bauteile kommen heutzutage so genannte Autoklaven zum Einsatz, also Öfen, die gegebenenfalls mit Überdruck (bis zu 10 bar) über Stunden beheizt werden, um eine vollständige Aushärtung der evakuierten Bauteile zu erreichen.

In Anbetracht der Tatsache, dass bei solchen Bauteilen regelmäßig das Gewicht einerseits im Vordergrund steht, die hohen Anforderungen an die Belastbarkeit solcher Bauteile aber nicht zu vernachlässigen ist, werden diese großflächigen Bauteile regelmäßig verstärkt durch verschiedenartige Versteifungselemente bzw. Stege, wobei hier im Flugzeugbau insbesondere zwischen "Stringer" und "Rippen" unterschieden wird. Diese "Stringer", die im Rahmen der vorliegenden Beschreibung auch als Spante bezeichnet werden, erstrecken sich regelmäßig entlang einer Innenfläche des Bauteils mit einer Spantenhöhe im Bereich bis 30 mm, wobei diese sich regelmäßig durch einen gradlinigen, insbesondere parallel zueinander ausgerichteten, Verlauf auszeichnen. Dabei erstrecken sich diese "Stringer" bzw. Spanten in einer vorgegebenen Erstreckungsrichtung des Bauteils über die gesamte Fläche und ragen (nur) in den Innenraum hinein. Weiterhin sind zumeist in regelmäßigen Abständen noch größere, so genannte "Rippen" so angeordnet, dass diese zusammen mit den "Stringern" bzw. Spanten eine zusätzliche innere Versteifung des Hohlprofilbauteils erreichen. Solche "Rippen" überspannen dabei den Querschnitt des Hohlprofilbauteils; sind also innen mit der Oberseite und der Unterseite verbunden. Zumeist verlaufen die "Stringer" / Spanten und die "Rippen" senkrecht zueinander; dies ist aber nicht zwingend notwendig.

Gerade bei der Ausgestaltung solcher komplexen Strömungsflächen mit der gewünscht gekrümmten Außenfläche und den Versteifungen aufweisenden Innenflächen ist bei der Herstellung eine positionsgenaue Ablage von Faserverbundmaterialien einfach, sicher und kostengünstig zu verwirklichen. Dies führt aber zu erheblichen Schwierigkeiten, weil die vorstehend genannten Anforderungen im Zielkonflikt zueinander stehen.

Um die im Einsatz solcher Flugzeugbauteile auftretenden Kräfte aufzufangen, ist es erforderlich, eine ausreichende Festigkeit zu realisieren, wofür eine entsprechende Anzahl von Schichten des Prepreg-Materials eingesetzt wird, was aber die erforderliche Beulsteifigkeit nicht sicher gewährleistet. Aus diesem Grund werden regelmäßig bei Flugzeugbauteilen größerer Bauart eine größere Anzahl von Schichten, beispielsweise etwa 30 Schichten, eingesetzt, um hier eine ausreichende Materialdicke von mehr als 4 mm zu erreichen. Für die Applikation der Vielzahl von Schichten bzw. Lagen, die letztendlich beispielsweise die Außenhaut eines solchen Flugzeugbauteils bildet, sind effiziente und produktive Herstellungsverfahren erforderlich. Ein im Flugzeugbau für Kleinbauteile bereits eingesetztes Verfahren ist das so genannte "*Automated Fibre Placement-*Verfahren" (AFP-Verfahren), wobei eine automatisch arbeitende Faserlegevorrichtung mit mindestens einem verfahrbaren Auftragskopf beispielsweise ein vorimprägniertes Faserverbundwerkstoffband auf eine Arbeitsoberfläche einer Werkzeugform oder eines Bauteils aufträgt. In Anbetracht der Produktivität dieses Verfahrens ist es wünschenswert, dies auch bei komplexeren Bauteil-Geometrien einzusetzen.

Hiervon ausgehend ist es Aufgabe der vorliegenden Erfindung, die mit Bezug auf den Stand der Technik geschilderten Probleme zumindest teilweise zu lösen. Insbesondere soll ein Verfahren zur Herstellung eines einstückigen Hohlprofilbauteils mit Faserverbundwerkstoff angegeben werden, das geeignet ist, mit einem automatisierten Verlegeprozess (insbesondere AFP) hergestellt zu werden. Zudem soll ein Verfahren bzw. eine Anordnung zur Durchführung eines solchen Verfahrens vorgeschlagen werden, mit dem gerade im Innenbereich des Hohlprofilbauteils (nahezu) Fertigmaß erreicht wird. Dabei sollen bei einer Anwendung des Verfahrens für beispielsweise Leitwerke eines Flugzeugs in Umfangsrichtung geschlossene Hohlprofilbauteile erreicht werden, in die bereits die Stringer bzw. Spanten eingearbeitet sind. Weiter soll dadurch erreicht werden, dass der innere Querschnitt bzw. die Innenkontur des einstückigen Hohlprofilbauteils mit einer Maßhaltigkeit gefertigt wird, so dass nachträglich passgenau vorgefertigte Rippen, Trennwände oder dergleichen eingesetzt und fixiert, insbesondere verklebt, werden können.

Diese Aufgaben werden gelöst mit einem Verfahren gemäß den Schritten des Patentanspruchs 1 sowie einer Anordnung zur Herstellung eines einstückigen Hohlprofilbauteils gemäß den Merkmalen des Patentanspruchs 10. Weitere vorteilhafte Ausgestaltungen der Erfindung sind in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, erläutert die Erfindung und gibt zusätzliche Ausführungsbeispiele an.

Das erfindungsgemäße Verfahren zur Herstellung eines einstückigen Hohlprofilbauteils mit Faserverbundwerkstoff umfasst zumindest die folgenden Schritte:
a) Bereitstellen wenigstens eines inneren Werkzeugkerns,
b) Bedecken des wenigstens einen inneren Werkzeugkerns mit zumindest einer Lage aus Faserverbundwerkstoff,
c) Aushärten der mindestens einen Lage aus Faserverbundwerkstoff und
d) Entfernen des wenigstens einen inneren Werkzeugkerns.

Bei dem vorgeschlagenen Verfahren werden die Schritte a) bis d) bevorzugt in der hier angegebenen Reihenfolge durchgeführt. Gleichwohl ist es möglich, zumindest einen Teil dieser Schritte zeitlich überlappend bzw. sogar parallel auszuführen. Außerdem ist auch möglich, dass weitere Schritte parallel bzw. zwischen diesen Schritten durchgeführt werden.

Das Verfahren betrifft insbesondere ein Herstellverfahren für ein einstückiges Hohlprofilbauteil. Mit "einstückig" soll insbesondere zum Ausdruck gebracht werden, dass das Hohlprofilbauteil keine durchgängige Materialunterbrechung aufweist. Mit der Bezeichnung "Hohlprofil" soll zum Ausdruck gebracht werden, dass das erzeugte Bauteil einen Hohlraum umgibt, wobei hierbei nicht vorrangig ein zylindrisches Bauteil gemeint ist, sondern vielmehr ein hiervon abweichendes Profil. So ist der Querschnitt dieses Hohlprofilbauteils bevorzugt nichtzylindrisch, sondern beispielsweise in etwa oval bzw. tropfenförmig. Im Hinblick auf die bevorzugte Anwendung dieses erfindungsgemäßen Verfahrens handelt es sich bei dem Hohlprofilbauteil um die Primärstruktur eines Leitwerks, insbesondere eines Seitenleitwerks. Darüber hinaus handelt es sich bei dem einstückigen Hohlprofilbauteil um ein solches, dessen Wandungen mit Faserverbundwerkstoff gebildet sind. Bevorzugt ist dabei, dass das gesamte einstückige Hohlprofilbauteil mit demselben Faserverbundwerkstoff hergestellt ist. Der Faserverbundwerkstoff wird insbesondere als bandförmiges Material bereitgestellt, insbesondere mit einem vorimprägnierten Faserverbundwerkstoffband, insbesondere einem unidirektionalen Kohlenstofffaser-Prepreg-Band (UD-CFK-Prepreg-Band). Grundsätzlich kann auch ein trockenes Verlegematerial gewählt werden, das im Nachhinein mit dem Kunststoffharz imprägniert wird. Darüber hinaus ist auch möglich, dass ein Material gewählt wird, das aus einem vorimprägnierten Faserbündel oder einem vorimprägnierten Faserstrang (Roving), insbesondere einem CFK-Roving, gebildet ist.

Gemäß Schritt a) wird zunächst wenigsten ein innerer Werkzeugkern bereitgestellt. Bei diesem inneren Werkzeugkern handelt es sich insbesondere um ein Werkzeugformteil, das beispielsweise eine Positivform (Mandril; Wickeldorn) umfasst. Bevorzugt ist bei diesem wenigstens einen inneren Werkzeugkern, dass dieser ebenfalls hohl ausgeführt ist. Durch diese hohle Ausgestaltung des inneren Werkzeugkerns wird eine besonders leichte und damit einfacher zu handhabende Anordnung durch Durchführung des Verfahrens verwirklicht. Außerdem ist dieses Werkzeug dann in besonderem Maße in der Lage, ein gezieltes thermisches Ausdehnungsverhalten während einer späteren thermischen Behandlung des Faserverbundwerkstoffs auszuführen, so dass durch ein gezieltes Ausdehnen und Schrumpfen einerseits die Maßgenauigkeit und andererseits die Entformbarkeit realisiert werden kann. Ganz besonders bevorzugt ist, dass für die Herstellung dieses einstückigen Hohlprofilbauteils genau ein hohler innerer Werkzeugkern eingesetzt wird. Bevorzugt ist der wenigstens eine innere Werkzeugkern aus metallischem Material.

Nach Schritt b) wird nun der wenigstens eine innere Werkzeugkern mit mindestens einer Lage aus Faserverbundwerkstoff bedeckt. Bevorzugt ist, dass eine Vielzahl von Lagen bzw. Schichten aus Faserverbundwerkstoff um den wenigstens einen inneren Werkzeugkern angeordnet werden, so dass diese zumindest teilweise einander direkt anliegend überdecken. Ganz besonders bevorzugt ist, dass der wenigstens eine innere Werkzeugkern vollständig mit Faserverbundwerkstoff überdeckt ist. Somit ist ganz besonders bevorzugt, dass nach Schritt b) der gesamte Werkzeugkern von Faserverbundwerkstoff umgeben ist (mit Ausnahme der Stirnseiten).

Schritt c) hat nun regelmäßig eine thermische Behandlung des Faserverbundwerkstoffs zur Folge, so dass die mindestens eine Lage aus Faserverbundwerkstoff aushärtet. Bevorzugt ist, dass das Aushärten der mindestens einen Lage aus Faserverbundwerkstoff unter Vakuum (in einem Vakuumaufbau) mit Überdruck im Ofen erfolgt. Bevorzugt ist weiter, dass Schritt c) in einem Autoklaven durchgeführt wird. Der Aushärtprozess einer solchen Lage aus Faserverbundwerkstoff ist dem Fachmann durchaus bekannt, so dass für weitere Erläuterungen hier keine Notwendigkeit gesehen wird.

Nach dem Aushärten des Faserverbundwerkstoffs kann schließlich gemäß Schritt d) der wenigstens eine innere Werkzeugkern so entfernt werden, dass eine Verformung des ausgehärteten, einstückigen Hohlprofilbauteils nicht erforderlich ist. Zu diesem Zweck ist der wenigstens eine innere Werkzeugkern so gestaltet, dass zum Zeitpunkt des Schrittes b) geringe Anpresskräfte des wenigstens einen inneren Werkzeugkerns hin zum Hohlprofilbauteil gegeben sind. Dies kann beispielsweise dadurch erreicht werden, dass der wenigstens eine innere Werkzeugkern nach der thermischen Behandlung schrumpft, und/oder dass nur linienförmige Kontaktbereiche nach Schritt c) hin zum Hohlprofilbauteil gebildet sind. Damit ist eine besonders leichte Entformbarkeit von Werkzeug und Hohlprofilbauteil möglich.

Mit dem hier vorgestellten Verfahren kann ein solches einstückiges Hohlprofilbauteil mit einer vorgegebenen Innenkontur unter Einhaltung sehr strenger Maßvorgaben durch die Anlage an dem inneren Werkzeugkern gefertigt werden. Bei der Ausgestaltung des wenigstens einen inneren Werkzeugkerns kann zudem das thermische Verhalten hinsichtlich einer Temperaturänderung zwischen Raumtemperatur und ca. 180 °C berücksichtigt werden, so dass nach Möglichkeit bei der hier angegebenen Aushärttemperatur für den Faserverbundwerkstoff von ca. 180 °C praktisch das innere Fertigmaß des einstückigen Hohlprofilbauteils erreicht ist. Durch das Abkühlen auf die Raumtemperatur und der damit einhergehenden Schrumpfung des wenigstens einen inneren Werkzeugkerns ist die Entformbarkeit von Hohlprofilbauteil und dem wenigstens einen inneren Werkzeugkern ohne eine Verformung des Hohlprofilbauteils möglich. So lassen sich insbesondere in Umfangsrichtung einstückige, geschlossene Hohlprofilbauteile herstellen, bei denen auch ein nachträglicher Einbau von Rippen möglich ist, ohne die innere Hohlprofil-Kontur zu bearbeiten bzw. das Hohlprofilbauteil erneut zu verformen. Außerdem bietet das hier vorgeschlagene Verfahren die Möglichkeit, einen automatischen Faserlegeprozess einzusetzen, insbesondere das so genannte Automated Fibre Placement-Verfahren (AFP).

Gemäß einer Weiterbildung des Verfahrens wird auch vorgeschlagen, dass zwischen Schritt a) und b) mindestens ein Oberflächensegmentwerkzeug auf einer Außenfläche des wenigstens einen inneren Werkzeugkerns positioniert wird. Ein solches Oberflächensegmentwerkzeug kann beispielsweise nach Art eines Rechtecks, einer Leiste oder eines ähnlichen Formteils ausgebildet sein. Dieses Oberflächensegmentwerkzeug wird insbesondere so auf der Oberfläche des wenigstens einen inneren Werkzeugs positioniert, dass dieses hervorstehend ist. Weiterhin ist bevorzugt, dass eine Mehrzahl solcher Oberflächensegmentwerkzeuge in etwa parallel zueinander, (direkt) benachbart zueinander und/oder in einer gemeinsamen Aussparung in der Außenfläche des wenigstens einen inneren Werkzeugkerns positioniert wird. Zudem ist möglich, dass die Oberflächensegmentwerkzeuge mit dem wenigstens einen inneren Werkzeugkern (lösbar) verbunden werden, dass eine Relativposition zwischen den Oberflächensegmenten und dem wenigstens einen inneren Werkzeugkern zumindest während der Schritte b) und/oder c) aufrecht erhalten wird.

Bei der vorstehend beschriebenen Ausführungsvariante des Verfahrens zur Herstellung eines einstückigen Hohlprofilbauteils wird auch vorgeschlagen, dass das mindestens eine Oberflächensegment mit einem Abschnitt aus Faserverbundwerkstoff appliziert wird. Dies bedeutet mit anderen Worten auch, dass vor und/oder nach dem Applizieren des Oberflächensegments hin zum wenigstens einen inneren Werkzeugkern ein Abschnitt aus Faserverbundwerkstoff an dem Oberflächensegmentwerkzeug angeordnet wird. Handelt es sich hierbei beispielsweise um eine leistenförmige Ausgestaltung des Oberflächensegmentwerkzeugs, kann der Abschnitt aus Faserverbundwerkstoff eine Oberfläche und zwei Seitenflächen des Oberflächensegmentwerkzeugs vollständig überdecken, so dass lediglich ein Unterboden, der schließlich mit der Außenfläche des wenigstens einen inneren Werkzeugkerns kontaktiert wird, frei von dem Abschnitt aus Faserverbundwerkstoff ist. Selbstverständlich sind hiervon ausgehend Abweichungen möglich, so dass beispielsweise nur eine Seitenfläche und/oder nur die Deckfläche mit einem solchen Abschnitt aus Faserverbundwerkstoff bedeckt ist. Die so vorbereiteten Oberflächensegmente können zueinander ausgerichtet nebeneinander auf der Außenfläche des wenigstens einen inneren Werkzeugkerns positioniert werden, insbesondere in der Weise, dass die Abschnitte aus Faserverbundwerkstoff von benachbarten Oberflächensegmenten aneinander direkt anliegen. Diese zwischen Spalten der Mehrzahl von Oberflächensegmentwerkzeugen angeordneten Bereiche der Abschnitte aus Faserverbundwerkstoff bilden nach dem Aushärtprozess beispielsweise die so genannten Stringer bzw. Spanten. Die modulare Gestaltung der Oberflächensegmentwerkzeuge im Hinblick auf die Außenfläche des wenigstens einen inneren Werkzeugs ermöglicht die Herstellung unterschiedlicher einstückiger Hohlprofilbauteile im Hinblick auf die Lage bzw. Ausgestaltung dieser Spanten bzw. Stringer durch eine entsprechende Auswahl, Anzahl bzw. der Form der Oberflächensegmentwerkzeuge.

Darüber hinaus wird vorgeschlagen, dass bei Schritt b) ein Wickelprozess umfasst ist. Damit ist insbesondere gemeint, dass das Bedecken des wenigstens einen inneren Werkzeugs mit vielen Schichten aus einer Lage aus Faserverbundwerkstoff erfolgt, wobei insbesondere das AFP-Verfahren zum Einsatz kommt. Hierzu kann einerseits eine Vorrichtung zum Verlegen des Faserverbundwerkstoffs relativ zum wenigstens einen inneren Werkzeugkern verfahren werden, es ist aber auch möglich, dass der wenigstens einen innere Werkzeugkern verschwenkt bzw. sogar rotiert wird.

Einer Weiterbildung des Verfahrens zur Folge werden mit der zumindest einen Lage aus Faserverbundwerkstoff parallel zueinander verlaufende und hin zum wenigstens einen inneren Werkzeugkern ausgerichtete Spanten gebildet. Hierbei kommt insbesondere die Verwendung mehrerer Oberflächensegmentwerkzeuge, wie sie oben beschrieben sind, in Betracht. Das bedeutet aber mit anderen Worten auch, dass die Applikation von Faserverbundwerkstoff zu dem wenigstens einen inneren Werkzeugkern (mit den Oberflächensegmentwerkzeugen) in der Weise erfolgt, dass nach dem Aushärtprozess (Schritt c)) unmittelbar die gewünschte, Fertigmaß-nahe Innenkontur des Hohlprofilbauteils erreicht wird. Eine nachträgliche Anordnung bzw. Befestigung solcher Spanten bzw. Stringer hin zum einstückigen Hohlprofilbauteil ist demnach nicht notwendig.

Darüber hinaus kann Schritt d) dadurch besonders einfach ausgeführt werden, dass in Schritt d) eine translatorische Relativbewegung zwischen der mindestens einen Lage aus Faserverbundwerkstoff und dem wenigstens einen inneren Werkzeugkern ausgeführt wird. Die translatorische Relativbewegung sieht insbesondere so aus, dass der wenigstens eine innere Werkzeugkern in Richtung der Längserstreckung des einstückigen Hohlprofilbauteils herausgeschoben wird. Damit ist insbesondere eine Relativbewegung gemeint, die parallel zum Verlauf der nach innen gerichteten Spanten bzw. Stringer ausgebildet ist. Diese Relativbewegung kann insbesondere dadurch unterstützt werden, dass für diesen Entformungsschritt zunächst ein Schrumpfprozess hinsichtlich des wenigstens einen inneren Werkzeugkerns realisiert wurde, so dass die Anlagekräfte zwischen dem wenigstens einen inneren Werkzeugkern und dem ausgehärteten Hohlprofilbauteil relativ gering sind.

Zudem wird als vorteilhaft angesehen, dass zumindest vor oder während Schritt c) außen auf die wenigstens eine Lage aus Faserverbundwerkstoff ein Druck aufgebracht wird. Hierfür kann die äußerste Lage aus Faserverbundwerkstoff noch mit weiteren Hüllschichten versehen sein, über die im Rahmen des Aushärtprozesses (Über-)Druck aufgebracht werden sollte. Der aufgetragene Druck führt dazu, dass auch die äußere Maßhaltigkeit des Hohlprofilbauteils eingehalten wird. Der Druck kann über ein kompressibles Medium und/oder ein starres Formteil realisiert werden. Bevorzugt ist dabei, dass der Druck während Schritt c) im Wesentlichen konstant bleibt.

Einer Weiterbildung des Verfahrens zur Folge wird nach Schritt d) mindestens eine den Querschnitt des einstückigen Hohlprofilbauteils überspannende Rippe eingesetzt. Hierbei ist der besondere Vorteil des beschriebenen Verfahrens erkennbar, weil nämlich für die Einsetzung der Rippe keine erneute Verformung des Hohlprofilbauteils erforderlich ist, ebenso wenig wie die Verwendung von Fügebauteilen wie Nieten, Schrauben, Distanzstücke oder dergleichen. Aufgrund der besonders hohen Maßhaltigkeit des einstückigen Hohlprofilbauteils nach innen hin können vorkonfektionierte Rippen einfach eingepasst werden, ohne dass es besonderer Korrekturmaßnahmen oder zusätzlicher Verbindungsbauteile bedarf. Vielmehr kann durch einen im Wesentlichen vollständigen, sich über die gesamte Länge der Rippe erstreckenden Oberflächenkontakt eine fügetechnische Verbindung, beispielsweise durch Kleben, erreicht werden.

Die Erfindung findet insbesondere Anwendung bei einem Flugzeugbauteil, das mit dem hier erfindungsgemäßen Verfahren hergestellt wurde, wobei dieses ein einstückiges Hohlprofilbauteil mit einem sich verjüngenden Querschnitt und einer Mehrzahl von längs verlaufenden Spanten aufweist. Bei diesem Flugzeugbauteil handelt es sich insbesondere um ein sogenanntes Seitenleitwerk (VTP: *Vertical Tail Plane).* Dieses einstückige Hohlprofilbauteil weist dabei, betrachtet in Längsrichtung des einstückigen Hohlprofilbauteils einen sich verjüngenden Querschnitt auf. Hierbei ist insbesondere eine in eine Richtung zulaufende, taillierte, und/oder trapezförmige Ausgestaltung des Hohlprofilbauteils gemeint, so dass das einstückige Hohlprofilbauteil zwei unterschiedliche große (offene) Stirnseiten bildet. Dieser sich verjüngende Querschnitt unterstützt das hier beschriebene erfindungsgemäße Verfahren in der Weise, dass die Entformbarkeit des ausgehärteten, einstückigen Hohlprofilbauteils begünstigt wird, indem der wenigstens eine innere Werkzeugkern über den größeren Querschnitt leicht entfernt werden kann.

Nur der Vollständigkeit halber sei darauf hingewiesen, dass neben einem Seitenleitwerk selbstverständlich auch andere Strömungsflächen des Flugzeugs bzw. eines anderen Fluggerätes hergestellt werden können, so z. B. auch große Querruder oder dergleichen.

Gemäß einem weiteren Aspekt der Erfindung wird auch eine Anordnung zur Herstellung von einstückigen Hohlprofilbauteilen vorgeschlagen, welche zumindest einen inneren Werkzeugkern nach Art eines Hohlkörpers mit einer Außenfläche und einer Mehrzahl von Oberflächensegmentwerkzeugen, die an der Außenfläche ausgerichtet anordenbar ist, aufweist. Dabei handelt es sich bei dem einen inneren Werkzeugkern, bevorzugt um einen metallischen Hohlkörper, der insbesondere dünnwandig ausgebildet ist. Auf wenigstens einer Außenfläche, bevorzugt aber auf zwei gegenüberliegenden Außenflächen, ist bevorzugt eine einzelne, für eine Mehrzahl von Oberflächensegmenten ausreichend große, Aussparung vorgesehen, an der die Oberflächensegmente zueinander ausgerichtet fixiert werden können. Gegebenenfalls kann die Außenfläche in diesem Bereich auch mit einer Gleitfläche ausgeführt sein, so dass die Oberflächensegmente sich beim Entformen leicht entlang der Außenfläche des inneren Werkzeugkerns bewegen lassen, nachdem diese gelöst sind.

Darüber hinaus wird auch eine Anordnung vorgeschlagen, bei der ein flexibles Druckelement vorgesehen ist, das den zumindest einen inneren Werkzeugkern wenigstens teilweise umschließen kann. Mit dem wenigstens einen flexiblen Druckelement wird bevorzugt die äußere Schicht bzw. Lage des vorpräparierten Hohlprofilbauteils während des Aushärteprozesses in einer formgenauen Lage fixiert.

Der Vollständigkeit halber sei darauf hingewiesen, dass die mit Bezug auf das Verfahren geschilderten Vorteile und Ausführungsvarianten für die Anordnung gleichermaßen gelten. Insofern ist die Anordnung insbesondere geeignet, das erfindungsgemäße Verfahren durchzuführen.

Die Erfindung sowie das technische Umfeld werden nachfolgend anhand der Figuren näher erläutert. Es ist darauf hinzuweisen, dass die Figuren schematisch sind und besonders bevorzugte Ausführungsvariante der Erfindung zeigen, auf diese jedoch nicht beschränkt ist. Es zeigen:
- Fig. 1:: einen Querschnitt durch eine erste Anordnung zur erfindungsgemäßen Herstellung eines einstückigen Hohlprofilbauteils,
- Fig. 2:: ein Beispiel für ein einstückiges Hohlprofilbauteil, das mit dem erfindungsgemäßen Verfahren hergestellt werden kann, und
- Fig. 3:: ein Flugzeug mit einem Flugzeugbauteil, das mit dem hier vorgestellten Verfahren bzw. der hier vorgestellten Anordnung herstellbar ist.

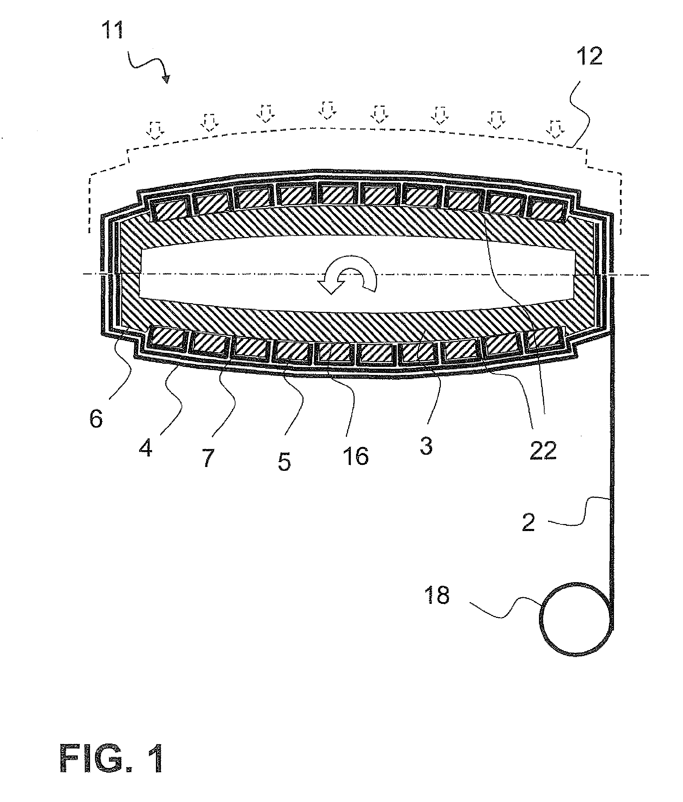

In Fig. 1 ist ein Querschnitt durch eine Anordnung 11 zur Herstellung von einstückigen Hohlprofilbauteilen veranschaulicht. Unten rechts in Fig. 1 ist zunächst ein Reservoir 18 für einen bandförmigen Faserverbundwerkstoff 2, beispielsweise imprägniertes UD-CFK-Material, vorgesehen. Aus diesem Reservoir 18 wird der Faserverbundwerkstoff 2 um einen inneren Werkzeugkern 3 angeordnet, wobei hierbei bevorzugt automatisiert Roboter oder dergleichen zum Einsatz kommen. Der innere Werkzeugkern 3 ist nach Art eines Hohlprofils ausgeführt und kann rotieren, wie dies durch den zentral dargestellten Pfeil angedeutet ist.

Der einstückig ausgeführte innere Werkzeugkern 3 weist auf seiner Außenfläche 6 eine Aufnahme 22 auf, die auf gegenüberliegenden Ober- und Unterseiten ausgebildet sind. In jede dieser Aufnahme 22 ist eine Mehrzahl leistenförmiger Oberflächensegmentwerkzeuge 5 angeordnet. Diese sind auf der Außenfläche 6 lösbar (z. B. verschraubt) angeordnet. Zwischen den benachbarten Oberflächensegmentwerkzeugen 5 sind Spalte ausgebildet, in die sich Teile von Abschnitten 7 des Faserverbundwerkstoffs 2 hinein erstrecken. Zu diesem Zweck werden die Oberflächensegmentwerkzeuge 5 einzeln mit separaten Abschnitten U-förmig umgeben und an dem inneren Werkzeugkern 3 befestigt. Bevorzugt sind die Aufnahmen 22 jeweils auf der Oberseite 23 und der Unterseite 24 so ausgebildet, dass die Oberflächensegmentwerkzeuge 5 seitlich gegeneinander verspannt sind und demnach die benachbarten Abschnitte 7 des Faserverbundwerkstoffs 2 sicher und mit einem vorgegebenen Druck aneinander anliegen.

Ein so vorgefertigtes Werkzeug mit dem (einzigen) inneren Werkzeugkern 3 und dem mit Abschnitten 7 aus Faserverbundwerkstoff 2 versehenen Oberflächensegmentwerkzeug 5 auf der Außenfläche 6 des inneren Werkzeugkerns 3 werden nun mehrere Lagen 4 von Faserverbundwerkstoff gemeinsam vorgesehen. Hierbei wird bevorzugt ein Wickelprozess ausgeführt, insbesondere nach dem sogenannten AFP-Verfahren. So können eine beliebige Anzahl von Schichten von Faserverbundwerkstoff einstückig ohne Unterbrechung um den inneren Werkzeugkern bzw. die Oberflächensegmentwerkzeuge 5 herum positioniert werden. Ist eine gewünschte Schichtdicke bzw. Materialstärke erreicht, wird der Faserverbundwerkstoff 2 hin zum Reservoir 18 unterbrochen und gegebenenfalls ein flexibles Druckelement 12 außen um den inneren Werkzeugkern mit dem Faserverbundwerkstoff 2 angeordnet. Unter einem gegenüber dem Atmosphärendruck (deutlich) erhöhten Druck und erhöhten Temperaturen, beispielsweise ca. 180°C, erfolgt dann die Aushärtung des Faserverbundwerkstoffs 2. Während dieser Temperaturerhöhung ist es möglich, dass durch eine entsprechende Aufweitung des inneren Werkzeugkerns ein gezielter Druck hin zum äußeren flexiblen Druckelement 12 bereitgestellt wird, so dass insbesondere auch die innere Maßhaltigkeit des Hohlprofilbauteils erreicht wird. Beim Abkühlen auf Raumtemperatur schrumpft der innere Werkzeugkern 3, so dass die Anlagekräfte hin zum erstarrten Hohlprofilbauteil gering sind, und eine einfache Entnahme des inneren Werkzeugkerns 3, beispielsweise durch eine translatorische Bewegung des inneren Werkzeugkerns 3, möglich ist.

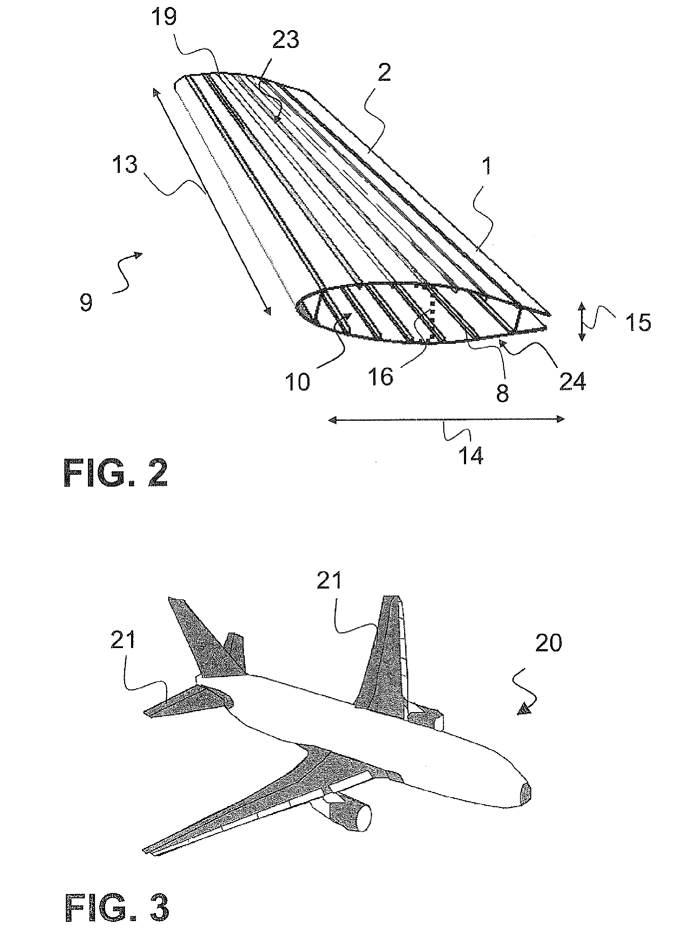

Fig. 2 zeigt ein mit diesem Verfahren hergestelltes Hohlprofilbauteil nach Art eines Flugzeugbauteils 9, nämlich nach Art eines Seitenleitwerks. Bei einem solchen Flugzeugbauteil handelt es sich beispielsweise um solche, die eine Länge 13 von ca. 6 m, eine Breite 14 von ca. 2 m und eine Höhe 15 von ca. 0,8 m aufweisen. Damit ist klar, dass bei solchen großen bzw. großvolumigen Bauteilen die Maßhaltigkeit eine besonders wichtige Rolle spielt, die erstmalig auch für den innen liegenden Bereich prozesssicher und automatisiert eingehalten werden kann. Insbesondere ist es hierbei möglich, das Flugzeugbauteil 9 mit einer endkontumahen Außenhaut 19 und einem vorgegebenen, sich gegebenenfalls in Richtung der Länge 13 verjüngenden, innen liegenden Querschnitt 10 zu fertigen. Die Maßhaltigkeit ist trotz der in Richtung der Länge 13 verlaufenden Spanten 8 so, dass gegebenenfalls Rippen 16 ohne zusätzliche Korrekturmaßnahmen in das Hohlprofilbauteil 1 integriert und eingepasst werden können. Hierzu kann eine solche Rippe 16 passgenau in das Hohlprofilbauteil eingeschoben und dort verklebt werden.

Fig. 3 veranschaulicht ein Flugzeug 20 mit diversen Strömungsflächen 21, wobei eine solche Strömungsfläche, beispielsweise nach Art eines Seitenleitwerks mit dem hier vorgeschlagenen Hohlprofilbauteil 1 gefertigt ist.

### Bezugszeichenliste

- 1: Hohlprofilbauteil
- 2: Faserverbundwerkstoff
- 3: innerer Werkzeugkern
- 4: Lage
- 5: Oberflächensegmentwerkzeug
- 6: Außenfläche
- 7: Abschnitt
- 8: Spante
- 9: Flugzeugbauteil
- 10: Querschnitt
- 11: Anordnung
- 12: Druckelement
- 13: Länge
- 14: Breite
- 15: Höhe
- 16: Rippe
- 17: Gleitfläche
- 18: Reservoir
- 19: Außenhaut
- 20: Flugzeug
- 21: Strömungsfläche
- 22: Aufnahme
- 23: Oberseite
- 24: Unterseite

## Patentansprüche

1. Verfahren zur Herstellung eines einstückigen Hohlprofilbauteils (1) mit Faserverbundwerkstoff (2) umfassend zumindest die folgenden Schritte:
a) Bereitstellen wenigstens eines inneren Werkzeugkerns (3),
b) Bedecken des wenigstens einen inneren Werkzeugkerns (3) mit zumindest einer Lage (4) aus Faserverbundwerkstoff (2),
c) Aushärten der mindestens einen Lage (4) aus Faserverbundwerkstoff (2),
d) Entfernen des wenigstens einen inneren Werkzeugkerns (3).

2. Verfahren nach Patentanspruch 1, bei dem zwischen Schritt a) und b) mindestens ein Oberflächensegmentwerkzeug (5) auf einer Außenfläche (6) des wenigstens einen inneren Werkzeugkerns (3) positioniert wird.

3. Verfahren nach Patentanspruch 2, bei dem das mindestens eine Oberflächensegmentwerkzeug (5) mit einem Abschnitt (7) aus Faserverbundwerkstoff (2) appliziert wird.

4. Verfahren nach einem der vorhergehenden Patentansprüche, bei dem Schritt b) einen Wickelprozess umfasst.

5. Verfahren nach einem der vorhergehenden Patentansprüche, bei dem mit der zumindest einen Lage (4) aus Faserverbundwerkstoff (2) parallel zueinander verlaufende und hin zum wenigstens einen inneren Werkzeugkern (3) ausgerichtete Spanten (8) gebildet werden.

6. Verfahren nach einem der vorhergehenden Patentansprüche, bei dem in Schritt d) eine translatorische Relativbewegung zwischen der mindestens einen Lage (4) aus Faserverbundwerkstoff (2) und dem wenigstens einen inneren Werkzeugkern (3) ausgeführt wird.

7. Verfahren nach einem der vorhergehenden Patentansprüche, bei dem zumindest vor oder während Schritt c) außen auf die mindestens eine Lage (4) aus Faserverbundwerkstoff (2) ein Druck aufgebracht wird.

8. Verfahren nach einem der vorhergehenden Patentansprüche, bei dem nach Schritt d) mindestens eine den Querschnitt des einstückigen Hohlprofilbauteils (1) überspannende Rippe (16) eingesetzt wird.

9. Flugzeugbauteil (9), hergestellt mit einem Verfahren nach einem der vorhergehenden Patentansprüche, wobei dieses ein einstückiges Hohlprofilbauteil (1) mit einem sich verjüngenden Querschnitt (10) und eine Mehrzahl von längs verlaufenden Spanten (8) aufweist.

10. Anordnung (11) zur Herstellung von einstückigen Hohlprofilbauteilen (1), aufweisend zumindest einen inneren Werkzeugkern (3) nach Art eines Hohlkörpers mit einer Außenfläche (6) und einer Mehrzahl von Oberflächensegmentwerkzeugen (5), die an der Außenfläche (6) gerichtet anordenbar ist.

11. Anordnung (11) nach Patentanspruch 10, bei der ein flexibles Druckelement (12) vorgesehen ist, das den zumindest einen inneren Werkzeugkern (3) wenigstens teilweise umschließen kann.
